# EUROPEAN PATENT APPLICATION

(11) **EP 2 708 159 A2**
(43) Date of publication of application: **19.03.2014**
(21) Application number: 12781786.4
(22) Date of filing: 13.04.2012
(51) Int. Cl.: A47C 7/62, A47B 21/00

(54) **COMPUTER CHAIR**

(30) Priority: 12.05.2011 KR 20110044363
(71) Applicant: Park, Chanseok, Hwaseong-si, Gyeonggi-doh 445-929 (KR)
(72) Inventor: Park, Chanseok, Hwaseong-si, Gyeonggi-doh 445-929 (KR)
(74) Representative: Müller-Boré & Partner Patentanwälte PartG mbB
(86) International application number: PCT/KR2012/002785
(87) International publication number: WO 2012/153920

(57) **Abstract**

The present invention relates to a computer chair comprising a seat support, a leg support, a monitor mount, a rotatable keyboard and mouse support and double rotatable armrests centred on a power seat which allows sitting posture to be adjusted so as to match the body form of the user. The object of the present invention is to make computer usage environments more ergonomic than hitherto, and to provide a computer usage environment which allows the user to perform more work effectively as they feel less tired even when operating a computer for a long time.

## Description

### TECHNICAL FIELD

The present invention relates to a computer chair, and in particular to a computer chair which allows a user to work on a computer in a comfortable posture by providing to a chair, whose posture is adjustable by a motor, a frame structure which can be equipped with a computer basic element such as a monitor, a computer body, a keyboard and a mouse and other computer peripherals.

### BACKGROUND ART

As information and communication technologies advance, a computer is widely used to process a variety of work, so the computer has become a key appliance in life, and computer usage continues to increase. Many computer users strongly want to work on computers in a more comfortable posture.

To meet the above mentioned demands, several ideas have been suggested and products invented to improve the computer workspace; however it is still difficult to find a computer chair which has been developed under the analysis of the structure of a human body and minimizing fatigue of the user's body.

Many computer users are still working on the computer for long periods of time in poor postures under unimproved computer using environment, so they may suffer from conditions such as the VDT (Visual Display Terminal) syndrome.

Examples of such poor sitting postures while using computer are: first, the 'forward head posture' that a user's back and shoulders are bent, and his neck being extended forward, and second, a posture that a user's back is not in close contact with the backrest but instead his bottom being slid half way down the seat as if lying down. The above mentioned two postures may cause fatigue on the spine, which may lead to a herniated cervical disc or the carpal tunnel syndrome. Such problems have occurred because the existing computer using environments are designed without consideration of user's postures.

If the computer monitor, keyboard and mouse are placed on the desk at the same height, the difference between the center of the monitor and the keyboard is only about 20-30cm. However, the viewing height of the user in a state that the user sits in a chair with his head being upright, his hip in close contact with the backrest, and his arms being laid down is about 60-80cm from the position of the hands. In the current computer working environment, the user has to bend his neck and back forward so as to see the monitor whose center is often lower than the user's viewing height, which consequently causes a continuous fatigue on the user's body. In order to overcome the above mentioned problems based on the healthy posture, the monitor should be placed higher, and the keyboard and the mouse should be placed lower than usual. Most of the existing computer workspace fails to consider the above mentioned physical characteristics of the computer user in its design.

### DISCLOSURE OF THE INVENTION

Accordingly, it is an objective of the present invention to provide a computer chair which makes it possible to provide the optimum computer using environment so that a computer user can work on a computer with less fatigue even when the user works on a computer for a long time in such a way to manufacture a conventional computer using environment by incorporating human ergonomics.

In order to achieve the above objectives, there is provided a computer chair which is designed to adjust a posture of a user depending on user's various physical conditions and comprises a monitor support member, a keyboard and mouse support member, an armrest, a seat support member and a frame of a leg support member.

The monitor support member is equipped with a pair of pipe frames one end of each of which is bolted or welded to a backside of the seat backrest inner frame, and the other end of each of which extends toward the front side of the seat in an arc shape above the user's head for thereby fixing the monitor support member, so the monitor can be always fixed just in front of user's eyes irrespective of a tilting angle of the user's backrest.

In addition, the keyboard and mouse support is configured with its one end portion being bent downward at a right angle and being connected to the seat support frame by means of the rotation engaging means, and the other opposite end of which being configured in a structure which can overcome the problems encountered in a cantilever support type by providing a detachable rotation type support member which adapts a magnet or a ring.

In addition, the arm rest comprises a frame in which a circular arm support member has a rotary shaft and is engaged at the top of one end of the armrest frame, and the opposite side of which is bent downward and is connected to the seat support frame by means of the rotation engaging means.

In addition, the seat support member is bolt connected to the bottom of the seat for thereby supporting the seat at a certain height, the bottom of the seat support member being engaged to the T-shaped bottom frame for thereby preventing the whole structures from falling aside or wobbling.

The leg support member can protrude forward along the guide rail installed at the inner side of the seat support member and can be driven by a servo motor device, so the user's legs can be supported at a certain height.

### ADVANTAGEOUS EFFECTS

Generally speaking, it is known the sitting posture with an upper body being upright, a shoulder being open while looking forward is the best sitting posture; however if a person keeps sitting in the above mentioned posture for long time, the loads from the upper body accumulate at the spine, which results in lots of fatigues. These fatigues may be removed in such a way to distribute the loads by changing the direction of the spine in a direction vertical to the gravity.

In other words, many people who work on computers for long time with their backs being upright can easily feel lots of fatigues, so they want to lie down for rests. These problems occur because the loads from the upper body is not well distributed but is concentrated at the spine and pelvis, so the sitting posture generally causes more fatigue than lying posture.

It is important to distribute or reduce the loads from the upper body which is applied to the spine when the user works on a computer for a long time. If the user is in a lying posture by tilting the backrest at a certain angle according to the present invention, the backrest of the computer chair supports the loads from the upper body for thereby significantly reducing the loads which are applied to the spine. Since the monitor can follow the viewing direction of the user in the above posture, the user can view the monitor in comfort posture in a lying posture.

In the present invention, since the user can work on a computer in a lying posture, the fatigue which is caused by the loads from the upper body while affecting the spine can be reduced, and the user can work on a computer for longer time.

The dual rotary type wrist rest moves and supports the weights of the arms which affect the user's shoulders and wrists irrespective of the positioning of the arms within the use ranges of the keyboard and the mouse, so it is possible to reduce the fatigues at the wrists and arms which can be caused as the user works on a computer for long time. It is possible to prevent the carpal tunnel syndrome according to the present invention. Since the leg support part is designed to support the user's legs with the legs being unfolded, the user can feel more comfort when he keeps lying.

### BRIEF DESCRIPTION OF THE DRAWINGS

The present invention will become better understood with reference to the accompanying drawings which are given only by way of illustration and thus are not limitative of the present invention, wherein;
Figure 1 is a view illustrating a use state when viewing from a lateral side of a computer chair according to the present invention;

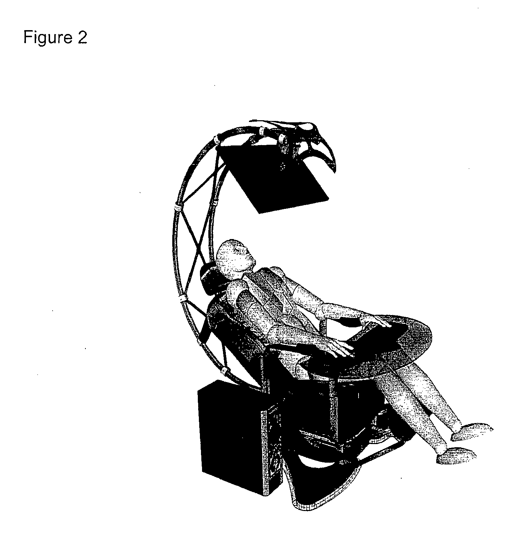

Figure 2 is a view illustrating a use state when a computer chair is tilted backward according to the present invention;
Figure 3 is a perspective view illustrating a use state when viewing from a rear lateral side of a frame structure of a computer chair according to the present invention;
Figure 4 is a disassembled perspective view illustrating the elements provided at an upper side of a frame structure of a computer chair according to the present invention;

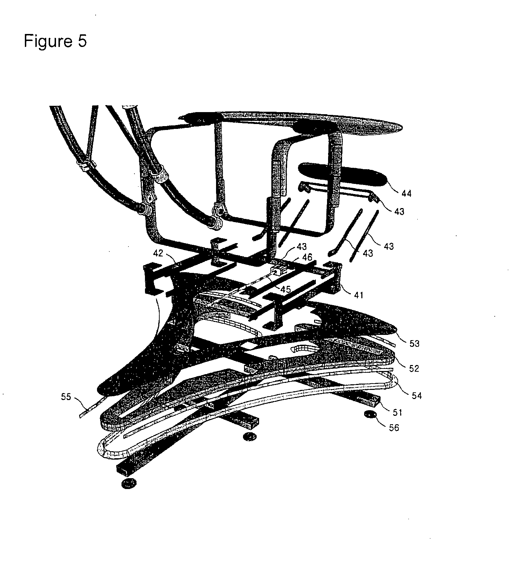

Figure 5 is a disassembled perspective view illustrating the elements provided at a lower side of a frame structure of a computer chair according to the present invention; and
Figure 6 is a view illustrating a leg support protrusion structure of a frame structure of a computer chair according to the present invention.

### MODES FOR CARRYING OUT THE INVENTION

The preferred embodiments of the present invention will be described with reference to the accompanying drawings.

The computer chair according to the present invention comprises a T-shaped metallic bottom frame member 51 which is two times wider than the width of a seat and is two times longer than the length between the front and rear ends of the seat bottom in order to support the whole structure and prevent the structure from wobbling or falling aside.

The bottom frame member 51 is made of a pipe whose cross section is rectangular. Each connection portion of the bottom frame member 51 is bolted or welded using a connection member.

At the bottom of an end portion of each member of the bottom frame member 51 is installed a screw type height adjusting support part 56 which is made of such material as rubber or urethane having an impact absorbing function so as to prevent any slipping or damages to the indoor floor.

At the top of the bottom frame member 51 are provided a pair of metallic seat support frames 41 at left and right sides, whose cross sections are an erect channel shape and lateral shapes are an H-shape or an I-shape. The seat support frames 41 are bolted or welded at the bottom frame member 51.

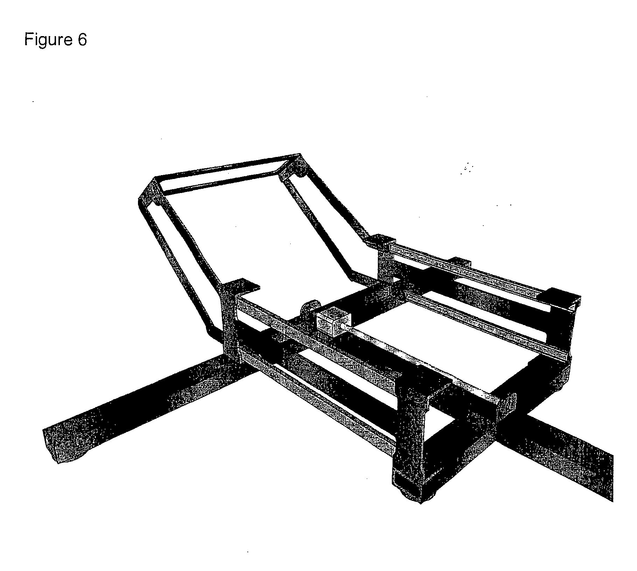

A pair of guide rails 42 is installed at upper and lower sides inside the seat support frame 41 on its sides for guiding a leg support frame 43. The leg support frame 43 is then installed on the guide rails 42 so that it can move forward and backward along the guide rail 42. At the fore-end of the leg support frame 43 is respectively installed a leg support cushion 44 (refer to Figure 6).

The leg support frame 43 is configured to move forward and backward along a lead screw 45 which is fixed at the bottom frame member 51 with the aid of the operation of the servo motor 46.

At the top of the seat support frame 41, a lower member 23 forming the lower side of the keyboard and the mouse support frame and a lower member 33 forming the lower side of the armrest frame are bolt connected to the front and rear end of the top of the seat support frame 41 in lateral direction with a certain distance between them. At both ends of the armrest frame and one end of the keyboard and the mouse support frame are installed a rotary shaft member 34 in an upright posture. To the top of the rotary shaft member 34 are engaged an upper member 22 forming the upper sides of the keyboard and the mouse support frame and an upper member 32 forming the upper side of the armrest frame. Both the upper members 22 and 32 are smoothly rotatable at the horizontal plane about the rotary shaft member 34.

At the top of the upper member 22 are bolted or adhered to the keyboard and mouse support board 21 which is made of a transparent or semi-transparent material such as reinforced plastic etc.

At the upper end of the upper member 32 of the armrest frame is a freely rotatable arm support member 31, inside of which is filled with a cushion material such as latex with a good recovery and impact absorbing function; and on the outer side of which is covered with a finishing material such as leather etc.

The arm support member 31 can rotate about its center and also about the rotary shaft member 34.

A power seat is bolted to the top of the lower member 23 of the keyboard and mouse support frame and the lower member 33 of the armrest frame. At the top and the bottom of the backrest inner frame of the power seat are welded or bolted the upper connection member 14 and the lower connection member 15 of the monitor support frame structure 10.

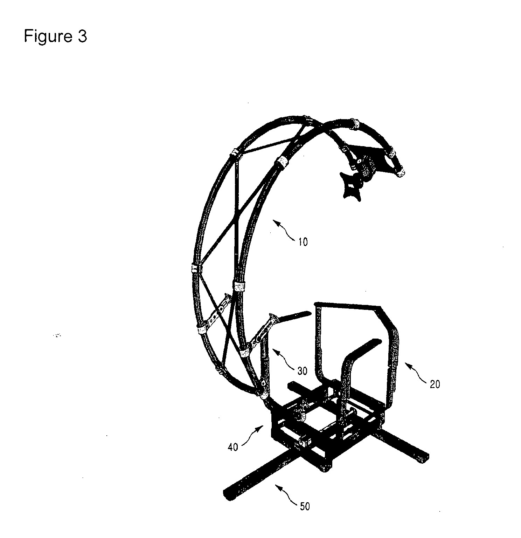

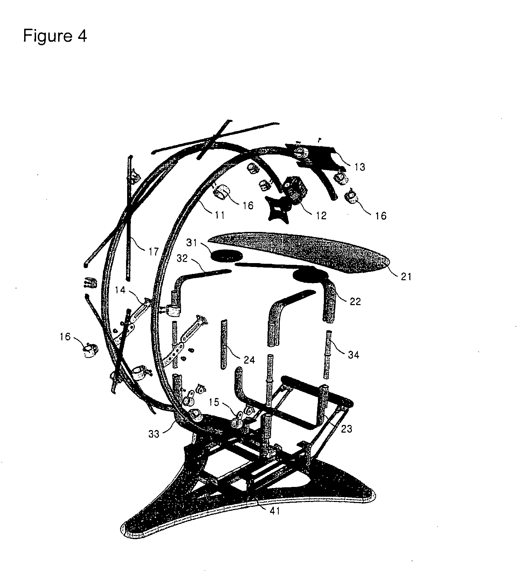

A pipe fixing member 16 configured to fix the monitor support frame structure 10 to the backrest of the power seat fits into its fixing position of the metallic pipe frame 11 and is bolt-connected to the upper connection member 14 and the lower connection member 15 of the monitor support frame. For allowing adjustments of the distance between the user's eyes and the monitor, the upper connection member 14 is equipped with a longitudinal hole which enables an adjustment of the position of the bolt engagement. (refer to Figures 3 and 4). The pipe fixing member 16, engaged to the pipe frame 11, can also be used to fix other elements or peripherals to the pipe frame 11.

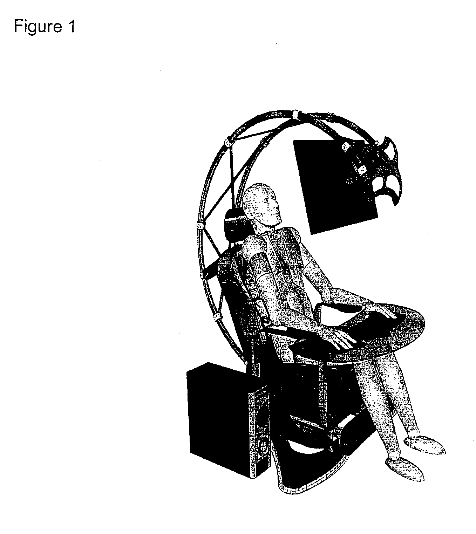

According to the monitor mounting method of the present invention, a monitor is hung at the far end of the fixed portion of the monitor support frame structure 10 (refer to Figure 1), thereby allowing the monitor to sway easily. In order to minimize the sway, it is preferred that at least one set of frame sway prevention member 17 is configured in an X-shape at an intermediate portion of the pipe frame 11. It is better equipped if a plurality of the X-shaped frame sway prevention members are provided in series.

It is preferred that the frame sway prevention member 17 is configured in an X-shape, and made of a thin, strong material such as a rod, a pipe or a wire. The pipe frame 11 is fixed using the pipe fixing member 16, thereby preventing any sway or distortion.

At the front end of the pipe frame 11 are provided four pipe fixing members 16 two of which are assigned to each pipe. The edge portions of the monitor fixing plate 13 with bolt holes are inserted into the slits of the four pipe fixing members 16 and are engaged using bolts. To the monitor fixing plate 13 is engaged a monitor mount device 12 whose angle can be adjusted within a certain range. To the monitor mount device 12 is bolt-connected a monitor with a thin profile such as an LCD monitor, etc.

The power and the audiovisual cables for the monitor can be positioned inside the pipe frame 11 or be fixed along its outer side, extending down to the backside of the seat and are connected to the computer body which is placed on the floor next to the present invention.

The monitor support frame structure 10 equipped with a monitor is integrally engaged to the seat backrest and is configured to move along with the seat backrest, so the monitor can always be fixed at the same position in relation to a user's view.

A posture memory device which is commonly used for a vehicle seat can be provided within the seat of the present invention, thereby a preferred posture of a computer user can be stored, and the stored posture be reproduced with a simple button operation.

There may be provided a heater (heating wire) or a ventilation means for thereby adjusting the temperature of the seat using a button according to the user's preferred temperature.

The buttons for the heater (heating wire), the ventilation, and the posture adjustment and memory function are preferably provided at the sides of the seat bottom or a certain position where a user's hand can easily reach.

The heater (heating wire) and the ventilation function may operate unnecessarily when a user leaves the present invention without turning off the power. In order to prevent such problem, there may be provided a mechanical or an electronic detection sensor which allows the desired operation only when a user sits in the seat.

A power supply module can be fixed underneath the seat so as to supply electric power from the power source of a home or office to the power seat, and a speaker may be installed into an additional fixing frame.

The bottom frame member 51 is covered by a bottom frame cover 52 made of plastic or a metallic material having a uniform thickness for the purpose of providing visual attractiveness whilst protecting the bottom frame member 51 from an external impact and also protecting the user from exposed bottom frame member 51.

At the top of the bottom frame cover 52 may be installed a bottom frame finishing cover plate 53 which may be made of a thin metallic or plastic material. Around the bottom frame cover 52 may be assembled a finishing member 54 made of a semi-transparent material, and between them is provided a LED lighting device 55 which is turned on/off by the user's operation, thus providing a pleasant visual effect.

As the computer peripherals such as a keyboard, a mouse, a speaker, etc. are installed around the seat, the computer user can work on the computer under more comfortable, ergonomic environment.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. A computer chair, comprising:
a seat for a user to lean back on or sit in;
a seat lower frame 40 which supports the seat from its lower side;
a T-shaped bottom frame member 51 which is provided below the seat lower frame for thereby stably supporting the seat lower frame;
an armrest 30 which is respectively provided at left and right sides of the seat, one end of each of the armrest being connected to the seat lower frame 40 in a rotatable structure;
a keyboard and mouse support member 20 whose one end is bent downward at a right angle and is connected to the seat lower frame 40 by means of a rotation engagement, the keyboard and mouse support member being provided in front of the seat; and
a monitor support frame structure 10 which is arranged in an arc shape and whose one end is connected to the lower back of the seat through a monitor support frame lower connection member 15, the other end of which is positioned in front of the seat for fixing a monitor, and the monitor support frame structure being engaged to the seat backrest through a monitor support frame upper connection member 14, the monitor support frame structure 10 being configured to move along with the seat backrest, so the monitor can always be positioned in front of user's eyes irrespective of the lying angle of the backrest.

2. The computer chair of claim 1, wherein the monitor support frame structure 10 has a sway prevention member which is arranged in an X-shape so as to prevent swaying.

3. The computer chair of claim 1, wherein one end of the keyboard and mouse support frame is fixed with a rotary shaft and the other end of which is not fixed has a detachable support member 24.

4. The computer chair of claim 1, wherein a leg support frame 43 which can protrude or be inserted along a guide rail by a lead screw driven by a servo motor is engaged to the seat lower frame 40.

5. The computer chair of claim 1, wherein there is a memory device which is capable of storing the user's preferred sitting posture and reproducing the memorized posture with a button operation.

6. The computer chair of claim 1, wherein the seat is equipped with a heater and ventilation means for thereby adjusting the temperature of the seat with a button operation according to the user's preferred temperature.
